# FASCICULE DE BREVET EUROPEEN

(11) **EP 1 500 491 B1**
(45) Date de publication et mention de la délivrance du brevet: **10.05.2006**
(21) Numéro de dépôt: 04291728.6
(22) Date de dépôt: 08.07.2004
(51) Int. Cl.: B32B 1/08, B32B 27/32, B32B 27/08, B32B 27/28, F16L 11/04

(54) **Conduite multicouche ayant une couche interne comportant une cyclo-oléfine**
Mehrschichtleitung mit einer Cycloolefin enthaltenden, inneren Schicht
Laminated pipe comprising a cycloolefin-based inner layer

(30) Priorité: 23.07.2003 FR 0308979
(43) Date de publication de la demande: 26.01.2005
(73) Titulaire: NOBEL PLASTIQUES, 51300 Marolles (FR)
(72) Inventeur: Dabouineau, Johann, 51400 Dampierre Au Temple (FR)
(74) Mandataire: Lavialle, Bruno François Stéphane

(56) Documents cités:
- FR-A- 2 707 550
- DATABASE WPI Section Ch, Week 198641 Derwent Publications Ltd., London, GB; Class A88, AN 1986-267395 XP002273549 & JP 61 192987 A (TOKAI RUBBER IND LTD) 27 août 1986 (1986-08-27)
- DATABASE WPI Section Ch, Week 199644 Derwent Publications Ltd., London, GB; Class A14, AN 1996-438940 XP002273550 & JP 08 217100 A (DAINIPPON PRINTING CO LTD) 27 août 1996 (1996-08-27)

## Description

La présente invention concerne une conduite multicouche, utilisable notamment dans un circuit de refroidissement d'un moteur thermique de véhicule automobile.

### ARRIERE PLAN DE L'INVENTION

Il existe de nombreuses structures de conduite, monocouche ou multicouche, destinées à être utilisées dans des circuits de transport de fluide embarqués sur les véhicules automobiles.

Le choix des matériaux les constituant résulte d'un compromis dans la satisfaction de nombreuses contraintes.

Ainsi, les conduites utilisées dans de tels circuits doivent notamment présenter une résistance chimique vis-à-vis du fluide transporté et ceci à des températures relativement élevées, des propriétés barrière au fluide transporté, une résistance à l'éclatement et à l'allongement à des températures (supérieure à 150°C) et à des pressions relativement élevées, et une résistance à l'oxygène dissout dans le fluide.

Ces contraintes sont de plus en plus difficiles à satisfaire du fait de l'augmentation des performances des moteurs thermiques et du durcissement des normes antipollution.

JP-A-6119287 décrit un tuyau comprenant une couche interne à base d'EPDM et une couche externe polymérique non spécifiée.

FR-A-2707550 décrit un tube pour carburant automobile, constitué par une couche interne en polyéthylène, une couche intermédiaire d'adhésif copolymère de polyéthylène, acide acrylique et/ou anhydride maléique, et une couche externe en polysulfure de phénylène.

### OBJET DE L'INVENTION

Par l'invention, on entend proposer une structure de conduite qui constitue un compromis satisfaisant vis-à-vis des contraintes précitées.

### BREVE DESCRIPTION DE L'INVENTION

A cet effet, on prévoit, selon l'invention, une conduite multicouche caractérisée en ce qu'elle comporte une couche interne comportant une cyclo-oléfine et une couche externe comportant un polyphénylène sulfure (PPS).

D'autres caractéristiques et avantages de l'invention ressortiront à la lecture de la description qui suit de modes de réalisation particuliers non limita-tifs de l'invention.

### BREVE DESCRIPTION DES DESSINS

Il sera fait référence aux dessins annexés, parmi lesquels :
- les figures 1 et 2 sont des vues en coupe transversale d'une conduite selon un premier mode de réalisation de l'invention et selon une variante de ce mode de réalisation,
- les figures 3 à 6 sont des vues analogues à la figure 1 d'une conduite selon un deuxième mode de réalisation et selon trois variantes de ce mode de réalisation.

### DESCRIPTION DETAILLEE DE L'INVENTION

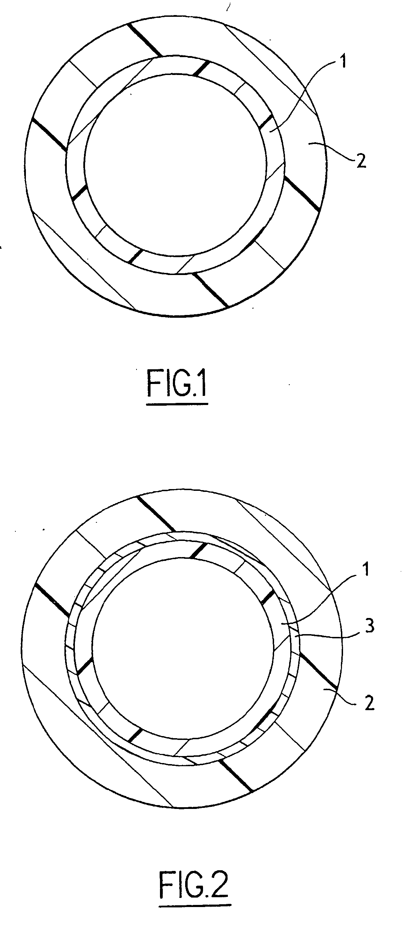

En référence à la figure 1, la conduite conforme au premier mode de réalisation de l'invention est une conduite bicouche qui comprend une couche interne 1 et une couche externe 2.

Le matériau utilisé pour la couche interne 1, qui sera en contact direct avec le fluide, est particulièrement résistant à l'hydrolyse.

La couche interne 1 est réalisée en un matériau thermoplastique comportant une cyclo-oléfine. Plus précisément, le matériau ici utilisé est un polymère cyclo-oléfine à base de dicyclopentadiène tel que celui produit par la société NIPPON ZEON sous les références ZEONOR 1020 R, 1410 K, 1600 R ou autres.

D'autres types de polymères cyclo-oléfine peuvent être utilisés et par exemple des polymères basés sur des cyclopentanes, cyclopentènes, cyclopentanones, cyclopentanones d'alkyle...

La couche externe 2 est en un matériau thermoplastique destiné notamment à apporter à la conduite sa résistance mécanique sous pression et en température.

Le matériau thermoplastique utilisé comporte un polyphénylène sulfure (PPS) comme par exemple celui produit par la société CHEVRON PHILLIPS sous la référence RYTON XTEL, XE et plus particulièrement XE3200 ou XE 3400.

Le matériau de la couche interne 1 forme une double barrière protégeant le matériau de la couche externe 2 qui est peu résistant à l'hydrolyse au-dessus de 100°C.

En variante, le matériau utilisé pour la couche externe 2 peut être stabilisé vis-à-vis de l'hydrolyse et/ou de la glycolyse et/ou de la chaleur.

En variante encore, telle que représentée à la figure 2, une couche intermédiaire 3 est disposée entre la couche interne 1 et la couche externe 2.

La couche intermédiaire 3 est ici une couche de liaison réalisée en un matériau thermoplastique présentant des propriétés d'adhésion vis-à-vis des matériaux des couches interne 1 et externe 2.

Ce matériau comporte au moins une phase qui est compatible avec le matériau de la couche interne 1 et qui est modifiée par des fonctions chimiques compatibles avec le matériau de la couche externe 2 ; ou bien comporte au moins une phase qui est compatible avec le matériau de la couche externe 2 et qui est modifiée par des fonctions chimiques compatibles avec le matériau de la couche interne 1. Ce matériau peut également comporter sous forme de mélange un matériau compatible avec le matériau de la couche interne 1 et un matériau compatible avec le matériau de la couche externe 2.

Le matériau thermoplastique utilisé pour la couche intermédiaire 3 est ici une polyoléfine modifiée comme par exemple un polypropylène greffé, un copolymère propylène-éthylène ou encore un polyéthylène greffé avec des fonctions chimiques compatibles avec le matériau thermoplastique de la couche externe 2.

Le matériau de la couche intermédiaire 3 est par exemple celui produit par la société MITSUI sous la référence TLN-4.

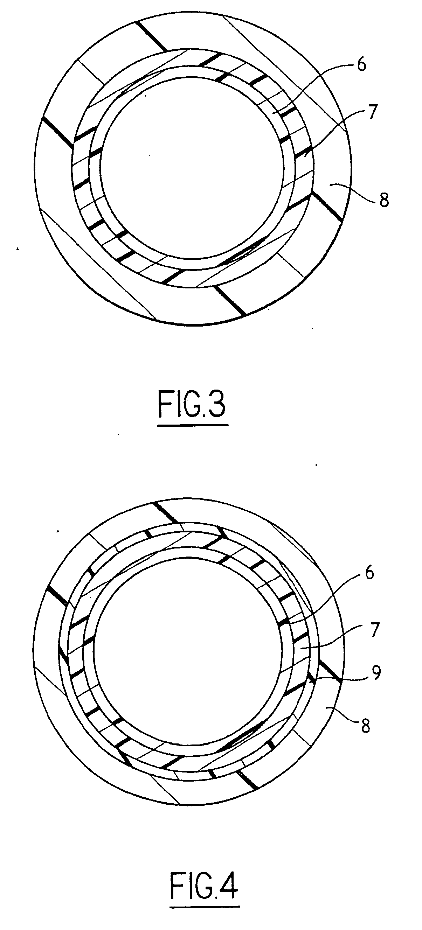

En référence à la figure 3, la conduite conforme au deuxième mode de réalisation de l'invention est une conduite tricouche comportant une couche interne 6, une couche intermédiaire 7, et une couche externe 8.

La couche interne 6 est réalisée en un matériau thermoplastique identique à celui de la couche interne 1 précédemment décrite.

La couche externe 8 est en un matériau thermoplastique identique à celui de la couche externe 2 précédemment décrite.

La couche intermédiaire 7 est réalisée en un matériau thermoplastique comportant une polyoléfine. La polyoléfine utilisée peut être stabilisée contre l'hydrolyse et/ou la chaleur. Le matériau utilisé est ici un polypropylène tel que celui produit par la société BASELL sous la référence MOPLEN EPD60R ou celui produit par la société BOREALIS sous la référence BHC5012. Le polymère utilisé peut être une autre polyoléfine telle qu'un polyéthylène. La polyoléfine apporte des propriétés barrière au fluide transporté. En particulier, la couche intermédiaire peut former une protection encore plus importante vis-à-vis de l'hydrolyse du fait de ses propriétés barrière à l'eau qui sont très élevées. Ces propriétés barrière viennent encore renforcer les propriétés barrière de la couche interne et assurent une protection optimale de la couche externe qui remplit elle principalement une fonction de résistance à la pression et à la température.

Dans la variante de réalisation représentée à la figure 4, une couche intermédiaire 9 supplémentaire a été disposée entre la couche intermédiaire 7 et la couche externe 8. La couche intermédiaire 9 est réalisée en un matériau thermoplastique qui présente des propriétés d'adhésion avec les matériaux de la couche intermédiaire 7 et de la couche externe 8 afin d'assurer une cohésion entre ces deux couches.

Le matériau thermoplastique utilisé pour la couche intermédiaire 9 est ici une polyoléfine modifiée comme par exemple un polypropylène greffé, un copolymère propylène-éthylène ou encore un polyéthylène greffé avec des fonctions chimiques compatibles avec le matériau thermoplastique de la couche externe 8.

Le matériau de la couche intermédiaire 9 est ici celui produit sous la référence TLN-4 par la société MITSUI.

Un thermoplastique élastomère compatible avec le polyphénylène sulfure peut également être utilisé pour la couche intermédiaire 9. Ce matériau peut incorporer une phase de polyphénylène sulfure de même nature que celui utilisé pour la couche externe 8.

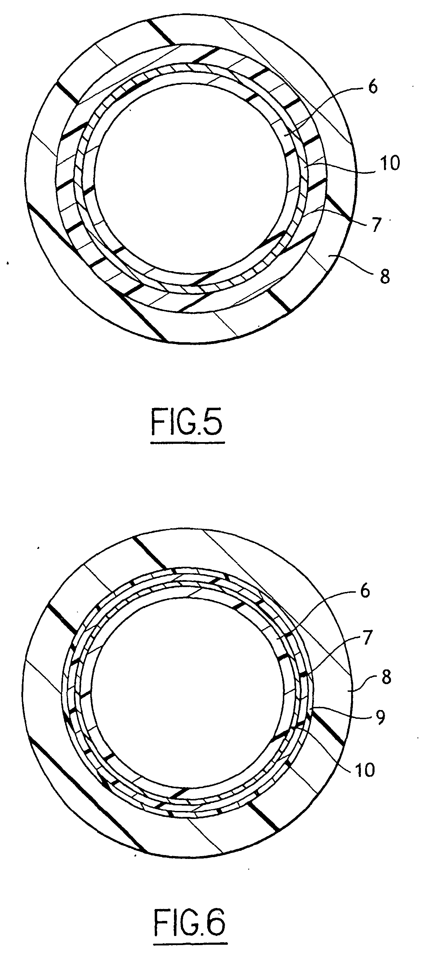

Dans la variante de la figure 5, une couche intermédiaire 10 supplémentaire est disposée entre la couche interne 6 et la couche intermédiaire 7.

La couche intermédiaire 10 est en un matériau thermoplastique présentant des propriétés d'adhésion avec les matériaux de la couche interne 6 et de la couche intermédiaire 7. Ce matériau thermoplastique comporte au moins une phase qui est compatible avec le matériau de la couche interne 6 et qui est modifiée par des fonctions chimiques compatibles avec le matériau de la couche intermédiaire 7, ou il comporte au moins une phase qui est compatible avec le matériau de la couche intermédiaire 7 et qui est modifiée par des fonctions chimiques compatibles avec le matériau de la couche interne 6. Le matériau utilisé pour la couche intermédiaire 10 peut également être un mélange d'un matériau compatible avec le matériau de la couche interne 6 et d'un matériau compatible avec le matériau de la couche intermédiaire 7.

Le matériau thermoplastique utilisé pour la couche intermédiaire 10 est par exemple celui produit par la société MITSUI CHEMICALS sous la référence TL221.

Les modes de réalisation des figures 3, 4 et 5 sont avantageux lorsque la cohésion de couches en contact direct les unes sur les autres est suffisante pour l'application envisagée. De préférence toutefois, le système de liaison aux extrémités est conçu afin de compenser un éventuel manque de cohésion des couches entre elles de manière à conserver une résistance mécanique et une étanchéité suffisantes du raccordement des extrémités de la conduite.

Dans la variante de la figure 6, deux couches intermédiaires supplémentaires 9, 10 ont été ajoutées à la structure décrite en référence à la figure 3.

La couche intermédiaire 9, disposée entre la couche intermédiaire 7 et la couche externe 8, est identique à celle précédemment décrite en relation avec la figure 4

La couche intermédiaire 10, disposée entre la couche interne 6 et la couche intermédiaire 7, est identique à celle précédemment décrite en relation avec la figure 5.

Cette variante est particulièrement intéressante lorsqu'une cohésion relativement importante est nécessaire entre les couches 6, 7 et 8.

' La conduite conforme aux modes et variantes de réalisation décrits ci-dessus est fabriquée par coextrusion de toutes les couches. Elle peut être obtenue également par coextrusion de certaines couches puis recouvrement par une autre, ou par extrusion d'une couche puis recouvrement. La conduite peut être réalisée par extrusion soufflage.

La conduite peut être lisse ou annelée, et subir des traitements tels que du thermoformage.

Bien entendu, l'invention n'est pas limitée au mode de réalisation décrit et on peut y apporter des variantes de réalisation sans sortir du cadre de l'invention tel que défini par les revendications.

Par conduite, on entend toute partie d'un circuit de transport de fluide.

## Revendications

1. Conduite multicouche **caractérisée en ce qu'**elle comporte une couche interne (1 ; 6 ; 11) comportant une cyclo-oléfine et une couche externe (2 ; 8) comportant un polyphénylène sulfure (PPS).

2. Conduite multicouche selon la revendication 1, **caractérisée en ce que** la cyclo-oléfine est un dicyclopentadiène.

3. Conduite multicouche selon la revendication 1, **caractérisée en ce qu'**elle comprend au moins une couche intermédiaire (3 ; 7, 9, 10 ; 12) en matériau thermoplastique.

4. Conduite multicouche selon la revendication 3, **caractérisée en ce qu'**elle comprend une couche intermédiaire (3) unique au contact des couches interne (1) et externe (2), le matériau thermoplastique de la couche intermédiaire présentant des propriétés d'adhésion avec les matériaux des couches interne et externe.

5. Conduite multicouche selon la revendication 4, **caractérisée en ce qu'**elle comprend une couche intermédiaire (7) dont le matériau thermoplastique comporte une polyoléfine.

6. Conduite multicouche selon la revendication 5, **caractérisée en ce que** la couche intermédiaire (7)dont le matériau thermoplastique comporte une polyoléfine constitue une première couche intermédiaire, et **en ce que** la conduite comprend au moins une couche intermédiaire (9, 10) supplémentaire en matériau thermoplastique.

7. Conduite multicouche selon la revendication 6, **caractérisée en ce qu'**elle comprend une couche intermédiaire supplémentaire (10) qui est disposée entre la couche interne (6) et la première couche intermédiaire (7) et dont le matériau thermoplastique présente des propriétés d'adhésion avec les matériaux de la couche interne de la première couche intermédiaire.

8. Conduite multicouche selon la revendication 6 ou la revendication 7, **caractérisée en ce qu'**elle comprend une couche intermédiaire supplémentaire (9) qui est disposée entre la première couche intermédiaire (7) et la couche externe (8) et dont le matériau thermoplastique comporte une polyoléfine modifiée pour être compatible avec les matériaux de la première couche intermédiaire et de la couche externe.

9. Conduite multicouche selon la revendication 6 ou la revendication 7, **caractérisée en ce qu'**elle comprend une couche intermédiaire supplémentaire (9) qui est disposée entre la première couche intermédiaire (7) et la couche externe (8) et dont le matériau thermoplastique comporte un thermoplastique élastomère modifié pour être compatible avec les matériaux de la première couche intermédiaire et de la couche externe.

## Patentansprüche

1. Mehrschichtige Leitung, **dadurch gekennzeichnet, dass** sie eine innere Schicht (1; 6; 11) umfasst, die ein Cycloolefin enthält, sowie eine äußere Schicht (2; 8), die ein Polyphenylensulfid (PPS) enthält.

2. Mehrschichtige Leitung nach Anspruch 1, **dadurch gekennzeichnet, dass** das Cycloolefin ein Dicyclopentadien ist.

3. Mehrschichtige Leitung nach Anspruch 1, **dadurch gekennzeichnet, dass** sie mindestens eine Zwischenschicht (3; 7, 9, 10; 12) aus thermoplastischem Material umfasst.

4. Mehrschichtige Leitung nach Anspruch 3, **dadurch gekennzeichnet, dass** sie eine einzige Zwischenschicht (3) umfasst, die mit der inneren Schicht (1) und der äußeren Schicht (2) in Kontakt steht, wobei das thermoplastische Material der Zwischenschicht Hafteigenschaften für eine Haftung mit den Materialien der inneren und der äußeren Schicht aufweist.

5. Mehrschichtige Leitung nach Anspruch 4, **dadurch gekennzeichnet, dass** sie eine Zwischenschicht (7) umfasst, deren thermoplastisches Material ein Polyolefin enthält.

6. Mehrschichtige Leitung nach Anspruch 5, **dadurch gekennzeichnet, dass** die Zwischenschicht (7), deren thermoplastisches Material ein Polyolefin umfasst, eine erste Zwischenschicht darstellt, und dass die Leitung mindestens eine zusätzliche Zwischenschicht (9, 10) aus thermoplastischem Material umfasst.

7. Mehrschichtige Leitung nach Anspruch 6, **dadurch gekennzeichnet, dass** sie eine zusätzliche Zwischenschicht (10) umfasst, die zwischen der inneren Schicht (6) und der ersten Zwischenschicht (7) angeordnet ist und deren thermoplastisches Material Hafteigenschaften für eine Haftung mit den Materialien der inneren Schicht und der ersten Zwischenschicht aufweist.

8. Mehrschichtige Leitung nach Anspruch 6 oder Anspruch 7, **dadurch gekennzeichnet, dass** sie eine zusätzliche Zwischenschicht (9) umfasst, die zwischen der ersten Zwischenschicht (7) und der äußeren Schicht (8) angeordnet ist und deren thermoplastisches Material ein Polyolefin umfasst, das modifiziert ist, um mit den Materialien der ersten Zwischenschicht und der äußeren Schicht kompatibel zu sein.

9. Mehrschichtige Leitung nach Anspruch 6 oder Anspruch 7, **dadurch gekennzeichnet, dass** sie eine zusätzliche Zwischenschicht (9) umfasst, die zwischen der ersten Zwischenschicht (7) und der äußeren Schicht (8) angeordnet ist und deren thermoplastisches Material ein thermoplastisches Elastomer umfasst, das modifiziert ist, um mit den Materialien der ersten Zwischenschicht und der äußeren Schicht kompatibel zu sein.

## Claims

1. A multilayer pipe, **characterized in that** it comprises an inner layer (1; 6; 11) comprising a cyclo-olefin, and an outer layer (2; 8) comprising a polyphenylene sulfide (PPS).

2. A multilayer pipe according to claim 1, **characterized in that** the cyclo-olefin is a dicyclopentadiene.

3. A multilayer pipe according to claim 1, **characterized in that** it comprises at least one intermediate layer (3; 7, 9, 10; 12) of thermoplastic material.

4. A multilayer pipe according to claim 3, **characterized in that** it comprises a single intermediate layer (3) in contact with the inner and outer layers (1 and 2), the thermoplastic material of the intermediate layer presenting properties of adhesion with the materials of the inner and outer layers.

5. A multilayer pipe according to claim 4, **characterized in that** it comprises an intermediate layer (7) whose thermoplastic material comprises a polyolefin.

6. A multilayer pipe according to claim 5, **characterized in that** the intermediate layer (7) whose thermoplastic material comprises a polyolefin constitutes a first intermediate layer, and **in that** the pipe comprises at least one additional intermediate layer (9, 10) of thermoplastic material.

7. A multilayer pipe according to claim 6, **characterized in that** it comprises an additional intermediate layer (10) which is disposed between the inner layer (6) and the first intermediate layer (7), and whose thermoplastic material presents properties of adhesion with the materials of the inner layer and of the first intermediate layer.

8. A multilayer pipe according to claim 6 or claim 7, **characterized in that** it comprises an additional intermediate layer (9) which is disposed between the first intermediate layer (7) and the outer layer (8), and whose thermoplastic material comprises a polyolefin modified to be compatible with the materials of the first intermediate layer and of the outer layer.

9. A multilayer pipe according to claim 6 or claim 7, **characterized in that** it comprises an additional intermediate layer (9) which is disposed between the first intermediate layer (7) and the outer layer (8), and whose thermoplastic material comprises a thermoplastic elastomer modified to be compatible with the materials of the first intermediate layer and of the outer layer.
